# EUROPEAN PATENT SPECIFICATION

(11) **EP 3 947 241 B1**
(45) Date of publication and mention of the grant of the patent: **17.06.2026**
(21) Application number: 20777357.3
(22) Date of filing: 24.03.2020
(51) Int. Cl.: B66C 15/04, G01S 17/931, G01S 17/42

(54) **CRANE ANTI-COLLISION SYSTEM, METHOD, PROGRAM, AND MANUFACTURING METHOD**
KOLLISIONSSCHUTZSYSTEM FÜR KRAN, VERFAHREN, PROGRAMM UND HERSTELLUNGSVERFAHREN
SYSTÈME, PROCÉDÉ, PROGRAMME ANTI-COLLISION DE GRUE ET PROCÉDÉ DE FABRICATION

(30) Priority: 27.03.2019 FI 20195241
(43) Date of publication of application: 09.02.2022
(73) Proprietor: Konecranes Global OY, 05830 Hyvinkää (FI)
(72) Inventor: MANNARI, Ville, 05830 Hyvinkää (FI); PAASIKIVI, Teemu, 05830 Hyvinkää (FI)
(74) Representative: Espatent Oy
(86) International application number: PCT/FI2020/050184
(87) International publication number: WO 2020/193858

(56) References cited:
- CN-U- 208 279 212
- CN-U- 208 279 212
- JP-A- 2000 075 032
- JP-A- 2000 075 032
- JP-A- 2017 071 455
- JP-A- 2017 071 455
- JP-A- 2017 130 098
- JP-A- 2018 105 822
- JP-A- 2018 105 822

## Description

### FIELD OF THE INVENTION

The invention relates to a crane anti-collision system, control system, anti-collision method, anti-collision program, and a manufacturing method for an anti-collision system.

### BACKGROUND

This section will provide the reader with a useful background information without intending to admit as prior art the technique described herein.

Container cranes are used to move containers, such as 20- and 40-foot sea containers, for example, in harbours. Containers are handled typically in large numbers, consequently, taking into account the dimensions of the containers, container terminals require significant space. To assure the safety of automatic container handling, container yards are fenced and provided with access control in order that, even in a fault condition, no personal injuries would occur. An attempt is made to avoid also material damages, both to avoid damaging the materials being handled and to avoid slowing down the handling of containers.

For automatic crane anti-collision, various measuring devices are used, such as ultrasound and laser sensors, with which the distance of a moving crane to obstacles in the direction of movement are monitored. Measurement of distance by ultrasound is in itself simple and quite reliable, but with poor discrimination capabilities: from ultrasound measurement, it is not necessarily clear whether an obstacle lying in the front of the crane will remain in its path, or outside of it. Using measurement based on laser sensors, it has, in turn, been necessary to settle for a single point or line, or to constantly move the sensor and thus weaken the durability of the measurement solution in an environment subject to powerful jolts as well as all weather conditions. Moving parts also wear naturally, and they require maintenance, such as greasing, changing of wearing surfaces and cleaning in order to remain operational.

In addition to crane anti-collision, there is a need to detect persons and, preferably, also larger animals in the danger area of the crane. By means of reliable monitoring of the danger area relating to a crane, it would be possible to avoid or decrease the need for fencing the working area of the crane and/or the access control arrangements covering the working area of the crane.

CN208279212U discloses a rail mounted gantry crane with laser collision detection equipment. JP2018105822A discloses a laser-based obstacle detection system. This document discloses the preamble of claim 1.

The object of the present invention is to obviate or mitigate the above-mentioned disadvantages of the prior art, or to provide new alternatives or improvements to current techniques.

### SUMMARY

According to a first aspect of the invention, a crane anti-collision system is provided as defined by claim 1.

The laser scanner may be a 3D laser scanner. The 3D laser scanner may be a multilayer laser scanner. The 3D laser scanner may be a LiDAR (Light Detection and Ranging) scanner.

The anti-collision system may be adjustable. The adjusting may comprise changing the installation site of the laser scanner in the direction of height. The adjusting may comprise changing the vertical installation site of the laser scanner in the lateral direction.

The surface of the goods handling area may be approximated as a plane.

The tolerance may be defined such that, of measurements of the laser scanner from the surface of the goods handling area, at least N% remain within the limits of tolerance, when the maximum allowed mass dimensioned for the crane is moved by the crane at a maximum possible acceleration or deceleration of the crane. N may be 50. N may be 90. N may be 95. N may be 99. N may be 99.9.

The scanning apparatus is arranged to scan in a downward diagonal direction.

A majority of the measurements of the scanning apparatus may be directed in the downward diagonal direction. The scanning apparatus may be arranged to scan in the downward diagonal direction such that the scanning apparatus receives the distance measurement information throughout its entire measurement area, either from the goods handling area or from targets in the goods handling area, when the scanning apparatus is installed in a crane working in the goods handling area. The scanning apparatus may be arranged to scan in the downward diagonal direction such that the scanning apparatus receives the distance measurement information throughout its entire measurement area, either from the goods handling area or from targets in the goods handling area, when the scanning apparatus is installed in a crane working in the goods handling area. The scanning apparatus may be arranged to scan in the downward diagonal direction at a minimum angle, which differs by no more than 0 or 5 or 10 or 20 degrees from the horizontal. The scanning apparatus may be arranged to scan in the downward diagonal direction at a maximum angle, which differs by no more than 5 or 10 or 20 or 30 or 45 or 60 or 69 degrees from the horizontal.

The detection apparatus may be arranged to initiate a hazard avoidance procedure, if the scanning apparatus does not receive distance measurement information from inside the reference zone from any part of the area measured by the scanning apparatus.

The hazard avoidance procedure may comprise issuing an audio signal. The hazard avoidance procedure may comprise issuing a light signal. The hazard avoidance procedure may comprise slowing down the movement of the crane. The hazard avoidance procedure may comprise an emergency stop of the crane. The hazard avoidance procedure may comprise raising the load higher to reduce the probability of the load colliding with a target. The hazard avoidance procedure may comprise changing the direction of the crane. The hazard avoidance procedure may comprise moving the load laterally in relation to the crane. The hazard avoidance procedure may comprise sending a notification to another crane and/or to the control system of the terminal or the terminal surveillance. The notification may comprise information regarding the location of a target, for example, coordinates of a target.

The goods handling area may be, at least partially, a storage area managed by the crane. The goods handling area may be a container handling area for handling and storing ISO containers.

The detection apparatus may be arranged to identify deviations downwards from the reference zone of the goods handling area, such as a pit or subsidence created in the goods handling area. The detection apparatus may be arranged to identify one or more reference points or surfaces formed in the goods handling area. Said one or more reference points or surfaces may comprise a part or parts projecting from or extending into the goods handling area. The detection apparatus may be arranged to facilitate navigation of the crane by means of the detected one or more reference points or surfaces.

The scanning apparatus comprises laser scanners installed in the front end according to each primary direction of the crane. The primary directions may be forwards and backwards. The scanning apparatus may further comprise, in relation to the primary directions, one or more laser scanners installed to the side of the crane or to the side of the lifting element of the crane.

One or more, or all of the laser scanners of the scanning apparatus may be 3D laser scanners. A beam of the 3D laser scanner may be conical. An opening angle of the beam of the 3D laser scanner may be at least 20, 30, 40, 50, 90 or 180 degrees. One or more of the laser scanners may be installed at a height of 5 m or more, 6 m or more, 8 m or more or 10 m or more.

One or more of the laser scanners may be at a height of 6 m or less, 9 m or less, or 12 m or less. The scanning apparatus may be arranged to scan in the plane of the goods handling area farther than a braking distance of a moving crane is, when the crane is fully loaded and at a top speed.

The scanning apparatus may be installed that high and at a slightly downwards directed angle that the scanning apparatus is able to detect immobile targets in the path of the crane in time to avoid collisions. The scanning apparatus may be installed that low that it is possible to detect by the scanning apparatus a target in the path of the crane regardless of the position of the target, when the target is a reference unit or a crash test dummy. The crash test dummy may be a Hybrid III, a THOR or a SID-IIs. The reference unit may be a rectangular prism. A minimum diameter of the reference unit may be less than 0.1 m. The minimum diameter of the reference unit may be less than 0.15 m. The minimum diameter of the reference unit may be less than 0.2 m. The minimum diameter of the reference unit may be less than 0.25 m. The minimum diameter of the reference unit may be less than 0.3 m. The minimum diameter of the reference unit may be less than 0.4 m. The maximum diameter of the reference unit may be less than 2 m. A maximum diameter of the reference unit may be less than 1.5 m. The maximum diameter of the reference unit may be less than 1 m.

The installation site and accuracy of the 3D laser scanner may be selected such that a distance between measurement layers formed by parallel measurement points or segments is 10 cm or less, 15 cm or less, 20 cm or less, 25 cm or less, 30 cm or less, 35 cm or less, or 40 cm or less.

The scanning apparatus may be installed such that, it is possible to detect by the scanning apparatus a target in the path of the crane and moving at a maximum speed V regardless of the position of the target, when the target is a reference unit or a crash test dummy. V may be 1 m/s. V may be 2 m/s. V may be 3 m/s. V may be 5 m/s. V may be 10 m/s. The anti-collision system may be arranged to be capable of stopping the crane before it would collide with a target moving at speed V.

The beams of the laser scanners may have one or more overlaps.

The beams of the laser scanners of the scanning apparatus may cover the path in front of the crane with at least such a lateral opening angle that the scanning apparatus covers the path of the crane also while the crane is turning.

The beams of the laser scanners of the scanning apparatus may cover parts of the path of the crane, in which the moving parts of the crane are below a height of M meters. M may be 1 m. M may be 2 m. M may be 3 m. M may be 4 m.

The beams of the laser scanners of the scanning apparatus cover the path in front of the load.

The detection apparatus may be arranged to define the reference surface by the RANSAC (Random Sample Consensus) method.

The detection apparatus may comprise a classifier, which is arranged to discriminate targets detected in the goods handling area into different types based on the size and/or movement of the target. The detection apparatus may be arranged to perform a suitable hazard reduction procedure, from among a group of more than one different hazard reduction procedures, on the basis of a type of target. The detection apparatus may be arranged to perform a suitable hazard reduction procedure such that the target is detected by one laser scanner. The detection apparatus may be arranged to perform a suitable hazard reduction procedure such that if the target is located in the common area of two or more beams, detection of the target by even one laser scanner from the beams is enough to perform the hazard reduction procedure. Alternatively, performing a hazard reduction procedure may be bypassed, unless the target also occurs on another laser scanner scanning the common area. The operation mode of the detection apparatus in relation to a target in the common area may be changeable. This change can be made by the operator.

According to a second aspect of the invention, a crane control system is provided, comprising:
an automatic control for controlling the crane; and
the anti-collision system according to the first aspect of the invention.

The automatic control may be arranged to be capable of controlling the crane automatically to pick up a container or to release a container.

According to a third aspect of the invention, a crane anti-collision method is provided as defined by claim 12.

According to a fourth aspect of the invention, a crane anti-collision program is provided, comprising computer program code arranged to perform, when executed on a computer, the method according to claim 12 with a crane equipped with the scanning apparatus defined by claim 1.

According to a non-claimed fifth aspect of the invention, a storage medium is provided, on which there is saved the computer program according to the fourth aspect.

According to a sixth aspect of the invention, a manufacturing method for a crane anti-collision system is provided as defined by claim 14.

Different embodiments of the present invention will be described or have been described only in connection with some aspects of the invention. A skilled person appreciates that any embodiment of an aspect of the invention may apply to the same aspect of the invention and other aspects alone or in combination with other embodiments, within the scope of the appended claims.

### BRIEF DESCRIPTION OF THE FIGURES

In the following, the invention will be described by means of examples with reference to the accompanying drawings.
Fig. 1 shows schematically a rear view of a container crane, in which is installed a crane anti-collision system according to one embodiment;
Fig. 2 shows schematically a top view of the container crane of Fig. 1;
Figs. 3 and 4 show schematically a front and side view of a beam of a laser scanner according to some embodiments;
Fig. 5 shows schematically a side view of measuring points and a reference zone of one crane anti-collision system;
Fig. 6 shows a simplified block diagram of a detection apparatus according to one embodiment of the invention;
Fig. 7 shows a simplified diagram of an anti-collision method according to one embodiment of the invention; and
Fig. 8 shows a simplified diagram of a manufacturing method according to one embodiment of the invention.

### DETAILED DESCRIPTION

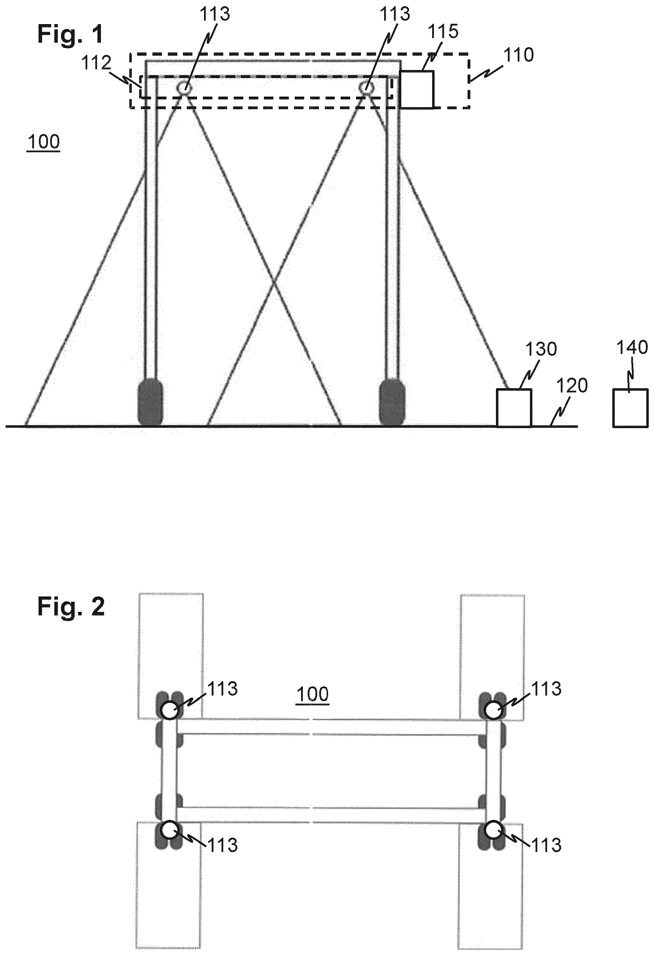

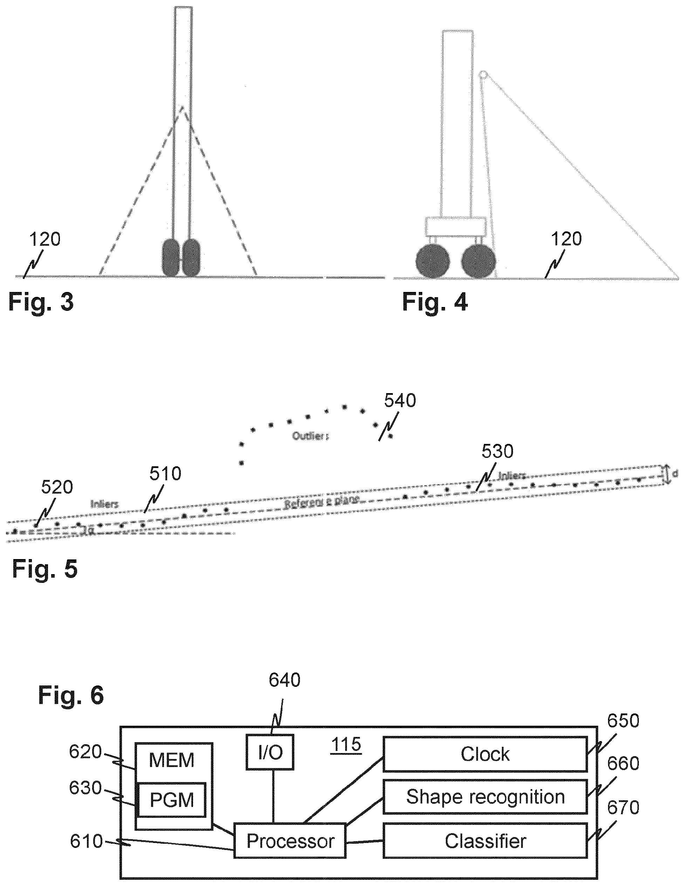

In the following description, like reference signs are used to designate like parts or steps. It must be noted that the figures presented are not entirely to scale, and that they mainly serve only the purpose of illustrating embodiments of the invention. Fig. 1 shows schematically a rear view of a container crane 100 in a goods handling area 120, into which container crane there is installed a crane anti-collision system 110 according to one embodiment. The anti-collision system 110 comprises a scanning apparatus 112 comprising one or more laser scanners 113. The laser scanner 113 is, for example, a 3D laser scanner, such as a multilayer laser scanner. The laser scanner 113 is arranged to measure an optical distance to targets 130 from the crane 100 in a first direction of travel. The anti-collision system 110 further comprises a detection apparatus 115. The detection apparatus 115 is arranged to define by the scanning apparatus 112 a three-dimensional reference zone 510 of a goods handling area (see Fig. 5) that is composed of a surface of the goods handling area 120 and of a vertical tolerance, and to automatically detect a target 130 in the goods handling area 120 on the basis that a height defined by the scanning apparatus 112 differs from said reference zone 510. The surface of the goods handling area may be approximated as a plane. Typically, goods handling areas are made relatively planar, but, in some embodiments, an attempt is made to form a surface corresponding to the shape of the actual goods handling area, for the purpose of more precisely defining the reference zone.

The crane further comprises a control system 140, such as an automatic crane control system, which is capable, for example, of loading and/or unloading containers to the goods handling area and/or to the container chassis of vehicles and/or off from these. For the sake of simplicity, the control system 140 is drawn in the vicinity of the crane in the plane of the goods handling area 120, even though, in practice, the control system 140 may be implemented in a server room or computer cloud or, for example, in a cabinet located in the crane 100.

The beam of the 3D laser scanner is, for example, conical. The opening angle of the beam of the 3D laser scanner may be at least 20, 30, 40, 50, 90 or 180 degrees.

Fig. 2 shows schematically a top view of the container crane 100 of Fig. 1. Fig. 2 shows the laser scanners installed in the primary directions of the crane. The crane 100 of Fig. 2 is provided with two laser scanners 113 in each of the directions of travel such that in connection with each wheel-supporting pillar is placed a laser scanner 113 directed forwards in the downward diagonal direction.

One or more of the laser scanners are installed, for example, to a height of 5 m or more, 6 m or more, 8 m or more, or 10 m or more.

One or more of the laser scanners is installed, for example, to a height of 6 m or less, 9 m or less or 12 m or less. In some embodiments, one or more laser scanners are to be moved from one installation site to another, or the installation site is to be freely selected from the structures of the crane. For example, the laser scanner may be moved lower or higher or to the side, for example, to take conditions into consideration. For example, during a foggy or particularly rainy time, one or more laser scanners may be placed lower and/or closer together. As another example, one or more laser scanners may be placed higher and possibly more in the downward diagonal direction in order to detect the lifting boom of a reach stacker possibly arriving or having arrived on a collision course. In one embodiment, the laser scanner is to be moved in the direction of height manually from the surface of the ground, for example, by an electrical or mechanical adjustment apparatus. Thus, the desired height can set easily and safely, for example, for servicing the laser scanner.

Figs. 3 and 4 show schematically a front and side view of the beam of a laser scanner 113 according to some embodiments. In these figures, the laser scanner 113 is attached to the frame of the crane 100 above the wheel (in question is, for example, a RTG, RMG or straddle carrier) such that the beam of the laser scanner 113 measures the distance to the surface of the storage area 120 or targets 330 in the storage area 120 immediately forwards from the wheel and the frame of the crane. In some embodiments, the beam does not reach to the wheel or even to the frame of the crane in order that scanning may be directed farther along the path of the crane and that information regarding a collision risk may be obtained earlier. In this case, a target that has come directly in front of the crane can remain undetected. To prevent this, the crane may comprise a safety rail, bumper or other measurement apparatus, such as a short-range ultrasound measurement. In one embodiment, laser scanning is constantly maintained, even when the crane is stopped. In one embodiment, after a shutdown of the crane, a safe return to movement is assured manually, for example, using camera surveillance.

As is observed from Figs. 3 and 4, the scanning apparatus 112 is arranged to scan in the downward diagonal direction such that the majority or all of the measurements are directed in the downward diagonal direction. Thus, it is achieved that the scanning apparatus 112 receives the distance measurement information throughout its entire measuring area, either from the goods handling area 120 or from targets 130 in the goods handling area 120, when the scanning apparatus 112 is installed in a crane 100 working in the goods handling area 120. Thus constantly changing information is obtained, whereby, as the crane 100 moves forward, on the basis of changes in the surface of the goods handling area 120 there should be created corresponding changes first to the front edge of the beam, and from there onwards to other portions of the beam. It is interpreted as a fault situation or collision hazard if, in the path of the crane 100 or a defined safety margin closer to the path of the crane 100, the scanning apparatus 112 does not form measurements located within the reference zone 510.

In one embodiment, the scanning apparatus 112 is installed that high and at such a slightly downwards directed angle that the scanning apparatus 112 is able detect immovable targets 130 in the path of the crane 100 and targets moving at the maximum speed V in time to avoid a collision. V is, for example, 1, 2, 3, 5 or 10 m/s. In one embodiment, the scanning apparatus 112 is installed that low that the scanning apparatus 112 is able to detect a target 130 in the path of the crane 100 regardless of the position of the target 130, when the target 130 is a reference unit or a crash test dummy.

In one embodiment, the installation site and the precision of the 3D laser scanners are selected such that the distance between the layers of the 3D laser scanners is 10 cm or less, 15 cm or less, 20 cm or less, 25 cm or less, 30 cm or less, 35 cm or less or 40 cm or less.

The beams of the laser scanners may have one or more overlapping areas. Due to the overlapping, the assurance of detecting collision risks may be increased. For example, the detection apparatus can perform a suitable hazard reduction procedure if a target is detected by even one laser scanner. Alternatively, if the target is located in the common area of two or more beams, a second laser scanner is required to detect the target. Thus, false alarms may be reduced. In one embodiment, performing the hazard reduction procedure may be bypassed, unless the target also occurs on another scanner scanning the common area. The operation mode of the detection apparatus in relation to a target in the common area may be changeable. This change can be made by the operator, for example, according to a desired level of sensitivity (comprehensive monitoring of the targets or comprehensive monitoring of the targets with increased sensitivity). The operator can set the desired level of sensitivity, for example, according to the conditions, for example, taking into consideration one or more of the following: rain, fog, sandstorm, lighting, stray dogs, objects brought by the wind, maintenance work, the age of the apparatus, the presumed condition of the apparatus.

The beams of the laser scanners 113 of the scanning apparatus 112 cover the path in the front of the crane 100 with at least such a lateral opening angle that the scanning apparatus 112 covers the path of the crane 100 also while the crane 100 is turning.

The beams of the laser scanners 113 of the scanning apparatus 112 may cover parts of the path of the crane, in which the moving parts of the crane are below a height of M meters. M may be 1 m. M may be 2 m. M may be 3 m. M may be 4 m.

The beams of the laser scanners 113 of the scanning apparatus 112 may cover the path in front of the load.

The detection apparatus may be arranged to identify deviations downwards from the reference zone of the goods handling area, such as a pit or subsidence created in the goods handling area. The detection apparatus may be arranged to identify one or more reference points or surfaces formed in the goods handling area that deviate upwards or downwards from the surface of the goods handling area. Said one or more reference points or surfaces may comprise a part or parts projecting from or extending into the goods handling area. The detection apparatus may be arranged to facilitate navigation of the crane by means of the detected one or more reference points or surfaces.

For example, into the goods handling area may be formed (for example, in the direction of travel of the crane) a groove, which may be defined by the detection apparatus. The groove is, for example, narrower than the wheel of the crane such that the groove does not hinder movement of the crane over the groove. The width of the groove may be, for example, 8 cm, 10 cm, 12 cm or 15 cm or less. The width of the groove may be 4 cm, 6 cm, 8 cm, 10 cm or 12 cm or more. The depth of the groove may be 2 cm, 4 cm, 6 cm or 8 cm or less. The depth of the groove may be 1 cm, 2 cm, 4 cm or 6 cm or more. In one embodiment, into the goods handling area is optionally or additionally formed (for example, in the direction of travel of the crane) a ridge or band, which may be defined by the detection apparatus. In one embodiment, into the goods handling area is optionally or additionally formed (for example, in the direction of travel of the crane) an optically discernible marking like a marking reminiscent of a center line, which noticeably changes the reflection of the scanning apparatus. For example, the signal-noise ratio of the scanner device can improve at the marking even though the measured value itself would indicate the same distance from the laser scanner.

Fig. 5 shows schematically a side view of the measuring points 520 and reference zone 510, as well as the reference plane 530 of the anti-collision system 110 of the crane 100 of Fig. 1. Fig. 5 shows the measurements of the goods handling area and, defined on the basis of the measurements, the reference plane tilted at angle α. Powerful braking of the crane may slightly tilt the crane forwards and create a measurement like that of Fig. 5, in which the reference plane appears as an uphill tilted at angle α.

Also designated in Fig. 5 is the thickness d of the reference zone, which is, for example, 0.1 m or 0.2 m or 0.3 m or 0.4 m or 0.5 m. The reference zone opens up like a wedge larger farther from the crane to account for the error of measurement increasing as a function of distance.

The detection apparatus 115 defines the reference zone 510 such that on the basis of the known geometry of the measurement points 520 and the scanning apparatus, the calculated surface of the goods handling area (for example, the average plane of the goods handling area) is defined, and to this surface is combined a specific vertical tolerance. Only measurements deviating from the reference zone may be considered indicative of targets 540 forming a collision risk. Thus, it is possible to eliminate unnecessary stops of the crane 100 caused by slight measurement errors, or even a plastic bag flying into the goods handling area 120.

The distances to the goods handling area 120 defined by scanning will change if the crane 100 tilts, for example, due to acceleration or braking. The tolerance may be defined such that, of the measurements of the laser scanner 113 from the surface of the goods handling area 120, at least N% remain within the limits of the tolerance, when the maximum allowed mass dimensioned for the crane is moved by the crane 100 at the maximum possible acceleration or deceleration of the crane 100. N may be optimized to prevent unnecessary stops and with consideration for adequately assuring the probability of detecting targets 540 that are relevant in terms of anti-collision.

In one embodiment, the detection apparatus 115 is arranged to define the reference surface by the 530 RANSAC (Random Sample Consensus) method.

In one embodiment, the detection apparatus 115 comprises (or is arranged to form) a classifier, which is arranged to discriminate targets detected in the goods handling area 120 into different types based on the size and/or movement of the target. In the case of overlapping beams, the classifier may be arranged to utilize the detections of more than one laser scanner to perform a more detailed three-dimensional identification of a detected target.

The detection apparatus 115 may be arranged to perform a suitable hazard reduction procedure, from among a group of more than one different hazard reduction procedures, on the basis the type of target, such as for example, issuing an audio signal or a light signal, slowing down the movement or an emergency stop of the crane 100, raising the load higher, changing the direction of the crane 100 or moving the load laterally in relation to the crane 100. In one embodiment, the hazard avoidance procedure comprises sending a notification to another crane and/or the control system of the terminal or the terminal surveillance. The notification may comprise information regarding the location of a target, for example, the coordinates of a target.

Fig. 6 shows a simplified block diagram of the detection apparatus 115 according to one embodiment of the invention. The detection apparatus comprises:
610. a processor or processing functionality (for example, a computer cloud as the functionality);
620. a memory and computer program code 630 stored therein, which computer program code, when executed on the processor or processing functionality, is arranged to control the operation of the detection apparatus 115;
640. an information transfer interface or functionality for receiving information from the scanning apparatus 112 as well as for submitting information to the control system 140 of the crane 100;
650. a clock for measuring time;
660. shape recognition means; and
670. a classifier, which is arranged to discriminate targets detected in the goods handling area 120 into different types based on the size of the target 130 and/or the movement of the target 130.

In Fig. 6, the clock 650, the shape recognition means 660, and a classifier 670 are each drawn as separate blocks. Optionally, the processor or processing functionality 610 may implement any one, or two, or each one of these.

The shape recognition means are able to detect a moving target 130 from among several, possibly successive detections by means of shape recognition, even though the target 130 moves and/or the crane 100 moves. By means of measured distances to a detected moving target 130 as well as lateral locations, the moving state of the target 130 may be defined. For example, significantly successive detections may be combined with moments in time measured by the clock. On the basis of the defined movements and the time elapsed during these, the speed and possible acceleration of a moving target 130 may be defined, including the direction of movement of the target 130. After this, the detection apparatus 115 can define a suitable hazard reduction procedure in relation to the moving target.

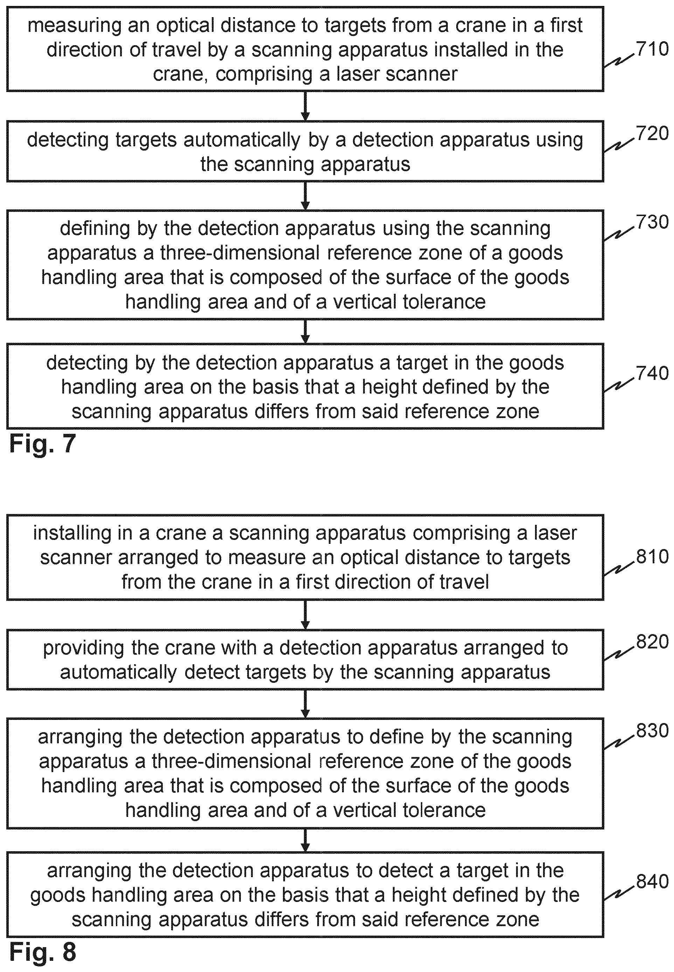

Fig. 7 shows a simplified diagram of an anti-collision method according to one embodiment of the invention, comprising:
710. measuring the optical distance to targets from the crane in a first direction of travel by a scanning apparatus installed in the crane, comprising a laser scanner;
720. detecting targets automatically by a detection apparatus using a scanning apparatus;
730. defining by the detection apparatus using the scanning apparatus a three-dimensional reference zone of a goods handling area that is composed of a surface of the goods handling area and of a vertical tolerance; and
740. detecting by the detection apparatus a target in the goods handling area on the basis that a height defined by the scanning apparatus differs from said reference zone.

Fig. 8 shows a simplified diagram of a manufacturing method according to one embodiment of the invention, comprising
810. installing in the crane a scanning apparatus comprising a laser scanner arranged to measure the optical distance to targets from the crane in the first direction of travel;
820. providing the crane with a detection apparatus arranged to automatically detect targets by the scanning apparatus;
830. arranging the detection apparatus to define by the scanning apparatus a three-dimensional reference zone of the goods handling area that is composed of the surface and vertical tolerance of the goods handling area; and
840. arranging the detection apparatus to detect a target in the goods handling area on the basis that a height defined by the scanning apparatus differs from said reference zone.

By means of the embodiments described above, an obstacle-free part of the goods handling area may be detected, and the surface of the area may be interpreted as free of obstacles. Further, the surface of the area forms a reference plane, which can be detected.

The foregoing description provides non-limiting examples of some embodiments of the invention. It is clear to a person skilled in the art that the invention is not restricted to details presented, but that the invention can be implemented in other equivalent ways, within the scope of the appended claims.

Some of the features of the afore-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A crane (100) anti-collision system (110) comprising:
a scanning apparatus (112) installed in a crane, comprising a laser scanner (113) arranged to measure an optical distance to targets (130) from the crane (100) in the first direction of travel; and
a detection apparatus (115) arranged to automatically detect targets (130) by the scanning apparatus (112);
wherein the detection apparatus (115) is arranged for:
defining by the scanning apparatus (112) a three-dimensional reference zone (510) of the goods handling area (120) that is composed of the surface (530) of the goods handling area and of a vertical tolerance; and
detecting a target (130) in the goods handling area (120) on the basis that a height defined by the scanning apparatus (112) differs from said reference zone (510); wherein
the scanning apparatus (112) comprises a plurality of the laser scanners (113) installed in a front end of the crane (100) according to each primary direction; and
the laser scanners (113) of the scanning apparatus (112) have beams that cover the path in front of a load;
**characterized in that**:
the scanning apparatus (112) is arranged to scan in a downward diagonal direction such that the majority or all of the measurements are directed in the downward diagonal direction; and
it is interpreted as a fault situation or collision hazard if
a) the scanning apparatus (112) fails to obtain constantly changing information so that as the crane (100) moves forward, on the basis of changes in the surface of the goods handling area (120) there are created corresponding changes first to the front edge of the beam, and from there onwards to other portions of the beam; and optionally
b) in the path of the crane (100) or a defined safety margin closer to the path of the crane (100), the scanning apparatus (112) does not form measurements located within the reference zone (510).

2. The anti-collision system (110) according to claim 1, **characterized in that** the laser scanner (113) is a 3D laser scanner.

3. The anti-collision system (110) according to claim 1 or 2, **characterized in that**:
the vertical tolerance is defined such that, of the measurements of the laser scanner (113) from the surface of the goods handling area (120), at least N% remain within the limits of tolerance, when the maximum allowed mass dimensioned for the crane (100) is moved by the crane (100) at the maximum possible acceleration or deceleration of the crane (100); and
N is 95.

4. The anti-collision system (110) according to any one of the preceding claims, **characterized in that**:
the detection apparatus is arranged to initiate a hazard avoidance procedure, if the scanning apparatus does not receive distance measurement information from inside the reference zone from any part of the area measured by the scanning apparatus.

5. The anti-collision system (110) according to any one of the preceding claims, **characterized in that** the detection apparatus (115) is arranged to identify deviations downwards from the reference zone (510) of the goods handling area (120).

6. The anti-collision system (110) according to any one of the preceding claims, **characterized in that**
the beams of the laser scanners have one or more overlapping areas; and
if the target is located in the common area of two or more beams, a second laser scanner is required to detect the target for reducing false alarms.

7. The anti-collision system (110) according to any one of the preceding claims, **characterized in that**
the detection apparatus is arranged to identify one or more reference points or surfaces formed in the goods handling area that deviate upwards or downwards from the surface of the goods handling area; and
the detection apparatus is arranged to facilitate navigation of the crane by means of the detected one or more reference points or surfaces.

8. The anti-collision system (110) according to any one of the preceding claims, **characterized in that** the beams of the laser scanners (113) of the scanning apparatus (112) cover the path in the front of the crane (100) with at least such a lateral opening angle that the scanning apparatus (112) covers the path of the crane (100) for the width required by the crane (100) also while the crane (100) is turning.

9. The anti-collision system (110) according to any one of the preceding claims, **characterized in that** the detection apparatus (115) is arranged to define the reference surface by the (530) Random Sample Consensus, RANSAC, method.

10. The anti-collision system (110) according to any one of the preceding claims, **characterized in that** the detection apparatus (115) comprises a classifier, which is arranged to discriminate targets detected in the goods handling area (120) into different types based on a size of the target (130) and/or a movement of the target (130).

11. A crane control system comprising:
an automatic control for controlling a crane; and
the anti-collision system (110) according to any one of the preceding claims.

12. A crane anti-collision method comprising:
measuring (710) the optical distance to targets from a crane in a first direction of travel by a scanning apparatus installed in the crane and comprising a plurality of laser scanners;
detecting (720) targets automatically by a detection apparatus using the scanning apparatus; and
using the detection apparatus for:
defining (730) by the scanning apparatus a three-dimensional reference zone of a goods handling area that is composed of the surface of the goods handling area and of a vertical tolerance; and
detecting (740) a target in the goods handling area on the basis that a height defined by the scanning apparatus differs from said reference zone;
using a plurality of the laser scanners installed in a front end of the crane (100) according to each primary direction for the defining of the reference zone; and
covering a path in front of a load by beams of the laser scanners (113) of the scanning apparatus (112);
**characterized by**:
scanning by the scanning apparatus in a downward diagonal direction such that the majority or all of the measurements are directed in the downward diagonal direction; and
it is interpreted as a fault situation or collision hazard if
a) the scanning apparatus (112) fails to obtain constantly changing information so that as the crane (100) moves forward, on the basis of changes in the surface of the goods handling area (120) there are created corresponding changes first to the front edge of the beam, and from there onwards to other portions of the beam; and optionally
b) in the path of the crane (100) or a defined safety margin closer to the path of the crane (100), the scanning apparatus (112) does not form measurements located within the reference zone (510).

13. A crane anti-collision program (630) comprising computer program code arranged to perform, when executed on a computer, the method according to claim 12 with a crane equipped with the anti-collision system (110) as defined by claim 1.

14. A manufacturing method of a crane anti-collision system, comprising:
installing (810) in a crane: the anti-collision system (110) according to any one of claims 1 to 11.

## Patentansprüche

1. Antikollisionssystem (110) für einen Kran (100), umfassend:
eine in einem Kran eingebaute Abtastvorrichtung (112), die einen Laserscanner (113) umfasst, der dazu eingerichtet ist, einen optischen Abstand vom Kran (100) zu Zielen (130) in der ersten Fahrtrichtung zu messen; und
eine Detektionsvorrichtung (115), die dazu eingerichtet ist, Ziele (130) mittels der Abtastvorrichtung (112) zu detektieren;
wobei die Detektionsvorrichtung (115) eingerichtet ist zum:
Definieren einer dreidimensionalen Referenzzone (510) des Warenumschlagbereichs (120), die sich aus der Oberfläche (530) des Warenumschlagbereichs und einer vertikalen Toleranz zusammensetzt, mittels der Abtastvorrichtung (112); und
Detektieren eines Ziels (130) im Warenumschlagbereich (120) basierend darauf, dass sich eine durch die Abtastvorrichtung (112) definierte Höhe von der Referenzzone (510) unterscheidet; wobei
die Abtastvorrichtung (112) mehrere Laserscanner (113) umfasst, die an einem vorderen Ende des Krans (100) für die jeweilige Hauptrichtung installiert sind; und
die Laserscanner (113) der Abtastvorrichtung (112) Strahlen aufweisen, die den Weg vor einer Last abdecken;
**gekennzeichnet dadurch, dass**:
die Abtastvorrichtung (112) dazu eingerichtet ist, in einer diagonal nach unten weisenden Richtung abzutasten, so dass die meisten oder alle Messungen diagonal nach unten gerichtet sind; und
auf eine Fehlersituation oder Kollisionsgefahr erkannt wird, wenn
a) die Abtastvorrichtung (112) keine sich ständig ändernden Informationen erhält, so dass während der Vorwärtsbewegung des Krans (100), auf Grundlage von Änderungen an der Oberfläche des Warenumschlagbereichs (120), entsprechende Änderungen zunächst am vorderen Ende des Strahls und von dort aus weiter zu anderen Teilen des Strahls erzeugt werden; und optional
b) auf dem Weg des Krans (100) oder in einem definierten Sicherheitsabstand näher am Weg des Krans (100) die Abtastvorrichtung (112) keine innerhalb der Referenzzone (510) gelegenen Messungen bildet.

2. Antikollisionssystem (110) nach Anspruch 1, **gekennzeichnet dadurch, dass** der Laserscanner (113) ein 3D-Laserscanner ist.

3. Antikollisionssystem (110) nach Anspruch 1 oder 2, **gekennzeichnet dadurch, dass**:
die vertikale Toleranz so definiert ist, dass von den Messungen des Laserscanners (113) ausgehend von der Oberfläche des Warenumschlagbereichs (120) mindestens N % innerhalb der Toleranzgrenzen bleiben, wenn die für den Kran (100) bemessene maximal zulässige Masse durch den Kran (100) mit der maximal möglichen Beschleunigung oder Verzögerung des Krans (100) bewegt wird; und
N 95 beträgt.

4. Antikollisionssystem (110) nach einem der vorhergehenden Ansprüche, **gekennzeichnet dadurch, dass**:
die Detektionsvorrichtung dazu eingerichtet ist, ein Gefahrenvermeidungsverfahren einzuleiten, wenn die Abtastvorrichtung aus dem Inneren der Referenzzone keine Abstandsmessinformationen zu irgendeinem Teil des von der Abtastvorrichtung gemessenen Bereichs empfängt.

5. Antikollisionssystem (110) nach einem der vorhergehenden Ansprüche, **gekennzeichnet dadurch, dass** die Detektionsvorrichtung (115) dazu eingerichtet ist, nach unten gerichtete Abweichungen von der Referenzzone (510) des Warenumschlagbereichs (120) zu identifizieren.

6. Antikollisionssystem (110) nach einem der vorhergehenden Ansprüche, **gekennzeichnet dadurch, dass**
die Strahlen der Laserscanner einen oder mehrere überlappende Bereiche aufweisen; und
falls sich das Ziel im gemeinsamen Bereich von zwei oder mehr Strahlen befindet, ein zweiter Laserscanner für die Detektion des Ziels erforderlich ist, um Fehlalarme zu reduzieren.

7. Antikollisionssystem (110) nach einem der vorhergehenden Ansprüche, **gekennzeichnet dadurch, dass**
die Detektionsvorrichtung dazu eingerichtet ist, einen oder mehrere im Warenumschlagbereich ausgebildete Referenzpunkte oder Referenzflächen zu identifizieren, die von der Oberfläche des Warenumschlagbereichs nach oben oder unten abweichen; und
die Detektionsvorrichtung dazu eingerichtet ist, die Navigation des Krans mittels der detektierten einen oder mehreren Referenzpunkte oder Referenzflächen zu erleichtern.

8. Antikollisionssystem (110) nach einem der vorhergehenden Ansprüche, **gekennzeichnet dadurch, dass** die Strahlen der Laserscanner (113) der Abtastvorrichtung (112) den Weg vor dem Kran (100) mit mindestens einem solchen seitlichen Öffnungswinkel abdecken, dass die Abtastvorrichtung (112) den Weg des Krans (100) über die vom Kran (100) benötigte Breite auch während der Drehung des Krans (100) abdeckt.

9. Antikollisionssystem (110) nach einem der vorhergehenden Ansprüche, **gekennzeichnet dadurch, dass** die Detektionsvorrichtung (115) dazu eingerichtet ist, die Referenzfläche (530) durch das Zufallsstichproben-Konsensverfahren, RANSAC, zu definieren.

10. Antikollisionssystem (110) nach einem der vorhergehenden Ansprüche, **gekennzeichnet dadurch, dass** die Detektionsvorrichtung (115) einen Klassifizierer umfasst, der dazu eingerichtet ist, die im Warenumschlagbereich (120) detektierten Ziele anhand einer Größe des Ziels (130) und/oder einer Bewegung des Ziels (130) in unterschiedliche Typen einzuordnen.

11. Kransteuerungssystem umfassend:
eine automatische Steuerung zum Steuern eines Krans; und
das Antikollisionssystem (110) nach einem der vorhergehenden Ansprüche.

12. Antikollisionsverfahren für einen Kran, umfassend:
Messen (710) der optischen Entfernung von einem Kran zu Zielen in einer ersten Fahrtrichtung durch eine Abtastvorrichtung, die im Kran eingebaut ist und mehrere Laserscanner umfasst;
automatisches Detektieren (720) von Zielen durch eine die Abtastvorrichtung verwendende Detektionsvorrichtung; und
Verwenden der Detektionsvorrichtung zum:
Definieren (730) einer dreidimensionalen Referenzzone eines Warenumschlagbereichs, die sich aus der Oberfläche des Warenumschlagbereichs und einer vertikalen Toleranz zusammensetzt, mittels der Abtastvorrichtung; und
Detektieren (740) eines Ziels im Warenumschlagbereich basierend darauf, dass sich eine durch die Abtastvorrichtung definierte Höhe von der Referenzzone unterscheidet;
Verwenden von mehreren Laserscannern, die an einem vorderen Ende des Krans (100) entsprechend jeder Hauptrichtung installiert sind, zum Definieren der Referenzzone; und
Abdecken eines Wegs vor einer Last mittels Strahlen der Laserscanner (113) der Abtastvorrichtung (112);
**gekennzeichnet durch**:
Abtasten in einer diagonal nach unten weisenden Richtung durch die Abtastvorrichtung, so dass die meisten oder alle Messungen diagonal nach unten gerichtet sind; und
wobei auf eine Fehlersituation oder eine Kollisionsgefahr erkannt wird, wenn
a) die Abtastvorrichtung (112) keine sich ständig ändernden Informationen erhält, so dass während der Vorwärtsbewegung des Krans (100), auf Grundlage von Änderungen an der Oberfläche des Warenumschlagbereichs (120), entsprechende Änderungen zunächst am vorderen Ende des Strahls und von dort aus weiter zu anderen Teilen des Strahls erzeugt werden; und optional
b) auf dem Weg des Krans (100) oder in einem definierten Sicherheitsabstand näher am Weg des Krans (100) die Abtastvorrichtung (112) keine innerhalb der Referenzzone (510) gelegenen Messungen bildet.

13. Kran-Antikollisionsprogramm (630) umfassend einen Computerprogrammcode, der so eingerichtet ist, dass er, wenn er auf einem Computer ausgeführt wird, mit einem Kran, der mit dem Antikollisionssystem (110) nach Anspruch 1 ausgerüstet ist, das Verfahren nach Anspruch 12 ausführt.

14. Herstellungsverfahren eines Antikollisionssystems für einen Kran, umfassend:
Einbauen (810) des Antikollisionssystems (110) nach einem der Ansprüche 1 bis 11 in einem Kran.

## Revendications

1. Système d'anticollision (110) pour grue (100), comprenant :
un dispositif de balayage (112) installé dans une grue, comprenant un balayeur laser (113) agencé pour mesurer une distance optique à des cibles (130) depuis la grue (100) dans la première direction de déplacement; et
un dispositif de détection (115) agencé pour détecter automatiquement des cibles (130) au moyen du dispositif de balayage (112);
le dispositif de détection (115) étant agencé pour :
définir, au moyen du dispositif de balayage (112), une zone de référence tridimensionnelle (510) de la zone de manutention de marchandises (120), qui se compose de la surface (530) de la zone de manutention de marchandises et d'une tolérance verticale; et
détecter une cible (130) dans la zone de manutention de marchandises (120) du fait qu'une hauteur définie par le dispositif de balayage (112) diffère de ladite zone de référence (510); dans lequel
le dispositif de balayage (112) comprend plusieurs balayeurs laser (113) installés à une extrémité avant de la grue (100) selon chaque direction principale; et
les balayeurs laser (113) du dispositif de balayage (112) comportent des faisceaux couvrant la trajectoire devant une charge;
**caractérisé en ce que** :
le dispositif de balayage (112) est agencé pour balayer dans une direction diagonale vers le bas de telle sorte que la plupart ou l'ensemble des mesures sont orientées dans une direction diagonale vers le bas; et
il est interprété comme une situation de défaut ou un risque de collision si
a) le dispositif de balayage (112) ne parvient pas à obtenir des informations en changement constant, de sorte que, sur la base des changements dans la surface de la zone de manutention de marchandises (120) à mesure que la grue (100) avance, des changements correspondants sont d'abord créés au niveau du bord avant du faisceau et à partir de là vers d'autres parties du faisceau; et en option
b) dans la trajectoire de la grue (100) ou à une marge de sécurité définie plus proche de la trajectoire de la grue (100), le dispositif de balayage (112) n'effectue aucune mesure à l'intérieur de la zone de référence (510).

2. Système d'anticollision (110) selon la revendication 1, **caractérisé en ce que** le balayeur laser (113) est un balayeur laser 3D.

3. Système d'anticollision (110) selon la revendication 1 ou 2, **caractérisé en ce que** :
la tolérance verticale est définie de telle sorte que, par rapport aux mesures du balayeur laser (113) à partir de la surface de la zone de manutention de marchandises (120), au moins N % restent dans les limites de tolérance lorsque la masse maximale admissible dimensionnée pour la grue (100) est déplacée par la grue (100) avec l'accélération ou décélération maximale possible de la grue (100); et
N est de 95.

4. Système d'anticollision (110) selon l'une des revendications précédentes, **caractérisé en ce que** :
le dispositif de détection est agencé pour initier une procédure d'évitement de dangers si le dispositif de balayage ne reçoit pas d'informations de mesure de distance provenant de l'intérieur de la zone de référence pour aucune partie de la zone mesurée par le dispositif de balayage.

5. Système d'anticollision (110) selon l'une des revendications précédentes, **caractérisé en ce que** le dispositif de détection (115) est agencé pour identifier des déviations vers le bas par rapport à la zone de référence (510) de la zone de manutention de marchandises (120).

6. Système d'anticollision (110) selon l'une des revendications précédentes, **caractérisé en ce que**
les faisceaux des balayeurs laser ont une ou plusieurs zones de recouvrement; et
si la cible se trouve dans la zone commune de deux ou davantage de faisceaux, un deuxième balayeur laser est nécessaire pour détecter la cible afin de réduire les fausses alarmes.

7. Système d'anticollision (110) selon l'une des revendications précédentes, **caractérisé en ce que**
le dispositif de détection est agencé pour identifier une ou plusieurs points ou surfaces de référence formés dans la zone de manutention de marchandises, qui s'écartent vers le haut ou vers le bas de la surface de la zone de manutention de marchandises; et
le dispositif de détection est agencé pour faciliter la navigation de la grue au moyen desdits un ou plusieurs points ou surfaces de référence détectés.

8. Système d'anticollision (110) selon l'une des revendications précédentes, **caractérisé en ce que** les faisceaux des balayeurs laser (113) du dispositif de balayage (112) couvrent la trajectoire devant la grue (100) avec au moins un angle d'ouverture latéral tel que le dispositif de balayage (112) couvre la trajectoire de la grue (100) sur la largeur requise par la grue (100) également pendant la rotation de la grue (100).

9. Système d'anticollision (110) selon l'une des revendications précédentes, **caractérisé en ce que** le dispositif de détection (115) est agencé pour définir la surface de référence (530) au moyen de la méthode de consensus par échantillonnage aléatoire, RANSAC.

10. Système d'anticollision (110) selon l'une des revendications précédentes, **caractérisé en ce que** le dispositif de détection (115) comprend un classificateur qui est agencé pour classer les cibles détectées dans la zone de manutention de marchandises (120) en différents types sur la base d'une taille de la cible (130) et/ou d'un mouvement de la cible (130).

11. Système de commande de grue, comprenant :
une commande automatique pour piloter une grue; et
le système d'anticollision (110) selon l'une des revendications précédentes.

12. Procédé d'anticollision pour grue, comprenant les étapes consistant à :
mesurer (710) la distance optique depuis une grue à des cibles dans une première direction de déplacement au moyen d'un dispositif de balayage installé dans la grue et comprenant plusieurs balayeurs laser;
détecter (720) automatiquement des cibles par un dispositif de détection utilisant le dispositif de balayage; et
utiliser le dispositif de détection pour :
définir (730), au moyen du dispositif de balayage, une zone de référence tridimensionnelle d'une zone de manutention de marchandises, qui se compose de la surface de la zone de manutention de marchandises et d'une tolérance verticale; et
détecter (740) une cible dans la zone de manutention de marchandises du fait qu'une hauteur définie par le dispositif de balayage diffère de ladite zone de référence;
utiliser plusieurs balayeurs laser installés à une extrémité avant de la grue (100) selon chaque direction principale pour définir la zone de référence; et
couvrir une trajectoire devant une charge au moyen des faisceaux des balayeurs laser (113) du dispositif de balayage (112);
**caractérisé par** les étapes consistant à :
balayer, par le dispositif de balayage, dans une direction diagonale vers le bas de telle sorte que la plupart ou l'ensemble des mesures soient orientées dans une direction diagonale vers le bas; et
il est interprété comme une situation de défaut ou un risque de collision si
a) le dispositif de balayage (112) ne parvient pas à obtenir des informations en changement constant, de sorte que, sur la base des changements dans la surface de la zone de manutention de marchandises (120) à mesure que la grue (100) avance, des changements correspondants sont d'abord créés au niveau du bord avant du faisceau et à partir de là vers d'autres parties du faisceau; et en option
b) dans la trajectoire de la grue (100) ou à une marge de sécurité définie plus proche de la trajectoire de la grue (100), le dispositif de balayage (112) n'effectue aucune mesure à l'intérieur de la zone de référence (510).

13. Programme d'anticollision pour grue (630) comprenant un code de programme informatique agencé pour effectuer, lorsqu'il est exécuté sur un ordinateur, le procédé selon la revendication 12 avec une grue équipée du système d'anticollision (110) selon la revendication 1.

14. Procédé de fabrication d'un système d'anticollision pour grue, comprenant l'étape consistant à :
installer (810) dans une grue : le système d'anticollision (110) selon l'une des revendications 1 à 11.
